# EUROPÄISCHE PATENTSCHRIFT

(11) **EP 0 991 673 B1**
(45) Veröffentlichungstag und Bekanntmachung des Hinweises auf die Patenterteilung: **18.12.2002**
(21) Anmeldenummer: 98938635.4
(22) Anmeldetag: 23.06.1998
(51) Int. Cl.: C08F 4/00, C08G 61/08

(54) **VERWENDUNG VON NANOSKALIGEN METALLOXID-TEILCHEN ALS POLYMERISATIONSKATALYSATOREN**
USE OF NANO-SCALED METAL OXIDE PARTICLES AS POLYMERISATION CATALYSTS
UTILISATION DE PARTICULES D'OXYDE DE METAL DE L'ORDRE DU NANOMETRE, COMME CATALYSEURS DE POLYMERISATION

(30) Priorität: 24.06.1997 DE 19726829
(43) Veröffentlichungstag der Anmeldung: 12.04.2000
(73) Patentinhaber: Institut Für Neue Materialien gem. GmbH, 66123 Saarbrücken (DE)
(72) Erfinder: GEITER, Elisabeth, D-54329 Konz (DE); SCHMIDT, Helmut, D-66130 Saarbrücken (DE)
(74) Vertreter: Barz, Peter
(86) Internationale Anmeldenummer: EP9803846
(87) Internationale Veröffentlichungsnummer: WO98058969

(56) Entgegenhaltungen:
- AU-A- 1 441 366

## Beschreibung

Die vorliegende Erfindung betrifft die Verwendung von nanoskaligen Metalloxid-Teilchen als Polymerisationskatalysatoren. Insbesondere betrifft die vorliegende Erfindung die Verwendung von nanoskaligen Metalloxid-Teilchen als Katalysatoren, die die herkömmlichen Katalysatoren für die thermische und photochemische Polymerisation von (z.B. radikalisch) polymerisierbaren Spezies wie beispielsweise Peroxide, Azo-Verbindungen und die herkömmlichen UV-Polymerisationsinitiatoren ersetzen können. Hierdurch ist es möglich, anorganisch-organische Kompositmaterialien herzustellen, die ein organisches Netzwerk enthalten bzw. daraus bestehen, das keinerlei von den herkömmlichen Polymerisationsinitiatoren stammende Rückstände enthält.

Es ist bereits bekannt, z.B. Silicium-haltige Polykondensate oder Heteropolykondensate, in denen beispielsweise eine Epoxygruppe oder eine Methacrylgruppe kovalent an ein Siliciumatom gebunden vorliegt, in Anwesenheit von thermisch oder photochemisch wirkenden Katalysatoren mit Hilfe dieser funktionellen organischen Gruppe zu vernetzen. Desweiteren ist bekannt, daß unter Verwendung von homogen in einer anorganisch-organischen Matrix dispergierten nanoskaligen Füllstoffen transparente Formkörper und Beschichtungen hergestellt werden können.

Erfindungsgemäß wurde demgegenüber überraschend gefunden, daß es möglich ist, eine Polymerisation bzw. Vernetzung mit Hilfe bestimmter polymerisierbarer Gruppierungen auch ohne die oben erwähnten herkömmlichen Katalysatoren zu bewirken, wenn man nanoskalige Teilchen (im folgenden auch als Nanopartikel bezeichnet) aus bestimmten Stoffen mit den zu polymerisierenden bzw. vemetzenden Spezies, die diese polymerisierbaren Gruppierungen aufweisen, mischt (z.B. darin dispergiert) und das resultierende Gemisch thermisch behandelt und/oder (mit UV-Licht) bestrahlt. Dadurch wird es z.B. möglich, die Polymerisation von Spezies (Monomeren, Oligomeren und Polymeren einschließlich Polykondensaten), die über (Meth)acrylat-Gruppierungen verfügen, und die Polyaddition von Spezies, die über einen Epoxid-Ring verfügen, in alleiniger Anwesenheit dieser Nanopartikel als Katalysatoren thermisch und/oder photochemisch zu bewirken. Vermutlich beruht die katalytische Wirkung dieser Nanopartikel vor allem auf der Anwesenheit (einer Vielzahl) von Lewis-Säure- bzw. Lewis-Base-Zentren auf deren Oberfläche.

Es ist zwar bekannt, daß z.B. Aluminiumalkyle nach dem Ziegler-Natta-Verfahren Polymerisationsreaktionen von Doppelbindungen katalysieren, ähnliche katalytische Effekte von Partikeln sind bisher jedoch nicht bekannt.

Demgemäß stellt die vorliegende Erfindung ein Verfahren zur thermischen und/oder photochemischen Polymerisation bzw. Vernetzung von Spezies (Monomeren, Oligomeren und Polymeren einschließlich Polykondensaten) mit mindestens einer polymerisierbaren Kohlenstoff-Kohlenstoff-Mehrfachbindung bzw. mindestens einem einer Ringöffnungspolymerisation zugänglichen kohlenstoffhaltigen Ring, der vorzugsweise mindestens ein Heteroatom aus der Gruppe Sauerstoff, Stickstoff und Schwefel als Ringatom enthält, bereit, das dadurch gekennzeichnet ist, daß als (vorzugsweise alleiniger) thermischer und/oder photochemischer Polymerisationskatalysator nanoskalige Teilchen von mindestens einem Metalloxid (einschließlich Mischoxiden von Metallen) eingesetzt werden.

Durch dieses Verfahren lassen sich z.B. (hochtransparente) Formkörper und Schichten für insbesondere optische Zwecke herstellen, die ebenfalls Gegenstand der vorliegenden Erfindung sind.

Die Vorteile der vorliegenden Erfindung liegen u.a. darin, daß bedingt dadurch, daß auf die herkömmlichen Polymerisations- bzw. Polyadditions-Katalysatoren verzichtet werden kann, keine entsprechenden Zersetzungsprodukte im fertigen Polymerisat (z.B. Formkörper oder Schicht) vorliegen und daß die erfindungsgemäß verwendeten Polymerisationskatalysatoren keiner Inhibierung durch Sauerstoff unterliegen, was bei vielen der herkömmlicherweise verwendeten (insbesondere UV-)Initiatoren ein großes Problem darstellt.

Im folgenden soll das erfindungsgemäße Verfahren näher erläutert werden.

Bei den zu polymerisierenden bzw. zu vernetzenden Spezies kann es sich sowohl um rein organische Spezies als auch um gemischt anorganisch-organische Spezies handeln.

Unter "organischen Spezies" werden in der vorliegenden Beschreibung und den anhängenden Ansprüchen Spezies verstanden, die neben Kohlenstoff und Wasserstoff als zwingenden Komponenten gegebenenfalls nur noch Elemente aus der Gruppe Sauerstoff, Stickstoff, Schwefel und Halogen (d.h. Fluor, Chlor, Brom und lod) enthalten. Demgegenüber sind "anorganisch-organische Spezies" solche, die neben den soeben genannten Elementen noch weitere Elemente enthalten können, insbesondere und vorzugsweise Silicium, aber auch andere Elemente wie beispielsweise Metalle wie Aluminium, Titan und Zirkonium (vorzugsweise zusätzlich zu Silicium).

Bevorzugte anorganisch-organische Spezies sind erfindungsgemäß (monomere) hydrolysierbare Silicium-Verbindungen, die neben einer oder mehreren hydrolysierbaren Gruppen (z.B. Alkoxygruppen) mindestens einen nicht-hydrolysierbaren Rest aufweisen, der über eine polymerisierbare Kohlenstoff-Kohlenstoff-Mehrfachbindung (vorzugsweise Doppelbindung) oder über einen einer Ringöffnungspolymerisation (Polyaddition) zugänglichen kohlenstoffhaltigen Ring (vorzugsweise Epoxid-Ring) verfügt, sowie von diesen monomeren Silanen abgeleitete Vorkondensate (Oligomere) und Polykondensate. Bei diesen Vorkondensaten bzw. Polykondensaten kann es sich wiederum um solche handeln, die abgeleitet sind von einem oder mehreren der soeben beschriebenen hydrolysierbaren Silane mit polymerisierbarer Kohlenstoff-Kohlenstoff-Doppelbindung oder einer Ringöffnungspolymerisation zugänglichem Ring sowie gegebenenfalls zusätzlich einem oder mehreren anderen hydrolysierbaren Silanen (ohne die soeben erwähnten Gruppen) und einer oder mehreren hydrolysierbaren Verbindungen anderer Elemente, die mit den hydrolysierbaren Silanen cokondensierbar sind, wie beispielsweise solchen von Aluminium, Titan und Zirkonium. Bevorzugt sind derartige Vorkondensate und Polykondensate jedoch ausschließlich von hydrolysierbaren Silanen abgeleitet.

Bei den hydrolysierbaren Silanen mit polymerisierbarer Gruppe (im folgenden soll der Ausdruck "polymerisierbare Gruppe" neben polymerisierbaren Kohlenstoff-Kohlenstoff-Mehrfachbindungen auch einer Ringöffnungspolymerisation zugängliche kohlenstoffhaltige Ringe umfassen) handelt es sich bevorzugt um Verbindungen, die über 2 oder 3, vorzugsweise 3 hydrolysierbare Reste und 1 oder 2, vorzugsweise einen nicht-hydrolysierbaren Rest mit polymerisierbarer Gruppierung (vorzugsweise (Meth)acrylat-Gruppierung oder Epoxid-Ring) verfügen. Beispiele für die hydrolysierbaren Reste sind Halogen (F, Cl, Br und I, insbesondere Cl und Br), Alkoxy (insbesondere C₁₋₄-Alkoxy wie z.B. Methoxy, Ethoxy, n-Propoxy, i-Propoxy und Butoxy), Aryloxy (insbesondere C₆₋₁₀-Aryloxy wie beispielsweise Phenoxy), Acycloxy (insbesondere C₁₋₄-Acyloxy wie z.B. Acetoxy und Propionyloxy) und Alkylcarbonyl (z.B. Acetyl). Besonders bevorzugte hydrolysierbare Reste sind Alkoxygruppen, insbesondere Methoxy und Ethoxy.

Die polymerisierbaren Gruppen sind vorzugsweise in Form einer Gruppierung R-O-(CH₂)ₙ-Si, wobei R die die polymerisierbare Gruppe umfassende Gruppierung darstellt und n einen Wert von 1 bis 10, vorzugsweise 2 bis 6, aufweist, mit dem Siliciumatom verbunden. Eine besonders bevorzugte Verbindungsgruppe zwischen R und Si ist die Oxypropylgruppe.

Erfindungsgemäß besonders bevorzugte hydrolysierbare Silicium-Verbindungen mit polymerisierbarer Gruppe sind diejenigen der allgemeinen Formel

X₃SiR'

worin die Gruppen X, gleich oder verschieden voneinander (vorzugsweise identisch), für eine hydrolysierbare Gruppe (vorzugsweise C₁₋₄-Alkoxy und insbesondere Methoxy und Ethoxy) stehen und R' einen Glycidyloxy-C₁₋₆-alkylen- oder Methacryloxy-C₁₋₆-alkylen-Rest darstellt.

In der obigen Formel können auch ein oder zwei Reste X, vorzugsweise ein Rest X, durch einen nicht-hydrolysierbaren Rest ohne polymerisierbare Gruppe ersetzt sein, wie z.B. eine Alkyl- oder Arylgruppe wie beispielsweise Methyl, Ethyl und Phenyl.

Weitere Beispiele für hydrolysierbare Silane mit polymerisierbarer Gruppe sind z.B. solche, die eine direkt an das Silicium gebundene Vinyl- oder Allylgruppe aufweisen.

Konkrete Beispiele für erfindungsgemäß als zu polymerisierende bzw. zu vernetzende Spezies (bzw. als Ausgangsmaterial dafür) einzusetzende hydrolysierbare Silane (gegebenenfalls in Form von Vorkondensaten bzw. Polykondensaten) sind 3-Glycidyloxypropyltrimethoxysilan, 3-Glycidyloxypropyltriethoxysilan, 3-Glycidyloxypropylmethyldimethoxysilan, 3-Glycidyloxypropylmethyldiethoxysilan, 3-Glycidyloxypropylethoxydimethoxysilan, 3-Methacryloxypropyltrimethoxysilan, 3-Methacryloxypropyltriethoxysilan, 3-Methacryloxypropylmethyldichlorsilan, 3-Methacryloxypropylmethyldiethoxysilan und 3-Methacryloxypropylmethyldimethoxysilan.

Unter den rein organischen Spezies, die nach dem erfindungsgemäßen Verfahren polymerisiert werden können, werden diejenigen bevorzugt, die über mindestens eine polymerisierbare (und vorzugsweise durch mindestens eine darin befindliche elektronenabziehende Gruppe aktivierte) Kohlenstoff-Kohlenstoff-Doppelbindung und/oder über mindestens einen einer Ringöffnungspolymerisation zugänglichen kohlenstoffhaltigen Ring mit mindestens einem Heteroatom aus der Gruppe O, S und N und mit 3 oder 4 Ringgliedern (insbesondere Oxiran-, Aziridin- und Oxetan-Ring) verfügen. Konkrete Beispiele für derartige Verbindungen sind von Acrylsäure und Methacrylsäure abgeleitete Verbindungen wie beispielsweise die Säuren selbst, (Meth)acrylnitril, Ester (vorzugsweise C₁₋₄-Alkylester), Amide und Anhydride dieser Säuren, Maleinsäure, Maleinsäureanhydrid, Fumarsäure, Vinylacetat, Vinylchlorid, Crotonsäure und deren Derivate (z.B. Ester und Amide), Styrol und dessen Derivate (insbesondere solche mit elektronenabziehenden Gruppen am aromatischen Ring, wie beispielsweise Chlorstyrol), Ethylenoxid, Propylenoxid, Butylenoxid, Cyclopentenoxid, Cyclohexenoxid, Aziridin und Oxetan und diesen Ringverbindungen entsprechende Gruppierungen enthaltende Verbindungen.

Selbstverständlich können erfindungsgemäß auch andere Ring-Verbindungen polymerisiert bzw. polyaddiert werden, z.B. Lactame wie ε-Caprolactam.

Bei den erfindungsgemäß eingesetzten Katalysatoren handelt es sich um Metalloxide, vorzugsweise (Misch-)Oxide (einschließlich hydratisierter Formen derselben) von Metallen aus den Hauptgruppen IIIa und IVa sowie den Nebengruppen Ib, IIb, IVb, Vb und Vlb des Periodensystems.

Erfindungsgemäß bevorzugt werden Metalloxide von Aluminium, Zinn, Kupfer, Silber, Zink, Titan, Zirkonium, Vanadium, Niob, Chrom, Molybdän und Wolfram, wobei Oxide von Aluminium (insbesondere Böhmit), Zinn, Titan und Zirkonium besonders bevorzugt werden.

Wie bereits oben erwähnt, handelt es sich bei diesen Metalloxid-Teilchen um nanoskalige Teilchen. Unter "nanoskaligen Teilchen" werden in der vorliegenden Beschreibung und den anhängenden Ansprüchen Teilchen mit einer durchschnittlichen Teilchengröße von nicht mehr als 200 nm, vorzugsweise nicht mehr als 100 nm, verstanden, wobei eine bevorzugte Teilchengröße im Bereich von 2 bis 50 nm liegt. Selbstverständlich können auch Teilchen mit einer Größe von 1 nm und darunter eingesetzt werden, obwohl diese Teilchen wegen ihrer schlechteren Zugänglichkeit weniger bevorzugt werden.

Die nanoskaligen Teilchen können entweder als solche (z.B. in Pulverform) oder in Form einer (vorzugsweise wäßrigen und/oder alkoholischen) Suspension eingesetzt werden oder aber auch in situ hergestellt werden.

Die nanoskaligen Metalloxid-Teilchen können sowohl amorph als auch kristallin sein und weiterhin können sie gegebenenfalls auch einer Oberflächenmodifizierung unterzogen worden sein, beispielsweise durch Umsetzung eines Teiles der an ihrer Oberfläche befindlichen OH-Gruppen mit (vorzugsweise rein organischen) Verbindungen, die neben einer mit diesen OH-Gruppen reaktiven Gruppierung (z.B. Carboxyl-Gruppierung) über eine polymerisierbare Gruppierung verfügen, die mit der polymerisierbaren Gruppierung der zu polymerisierenden bzw. vernetzenden Spezies identisch ist, so daß die Katalysator-Teilchen nicht nur in dem resultierenden Netzwerk eingeschlossen, sondern sogar über kovalente Bindungen daran gebunden sind. Die Oberflächenmodifizierung der nanoskaligen Teilchen kann z.B. auf die Art und Weise erfolgen, wie sie insbesondere für den Fall von Siliciumdioxid- und Aluminiumoxid-Teilchen bereits ausführlich im Stand der Technik beschrieben ist.

Zur Herstellung der nanoskaligen Teilchen kann z.B. so vorgegangen werden, daß man eine (oder mehrere) hydrolysierbare Metallverbindung(en), wie z.B. ein Salz, einen Komplex oder ein Alkoxid (insbesondere C₁₋₆-Alkoxid, z.B. mit Methoxy, Ethoxy, n-Propoxy, i-Propoxy, n-Butoxy und Butoxyethoxy als Alkoxidgruppe), in alkoholisch/wäßrigen Lösungen hydrolysiert (vorzugsweise bei Raumtemperatur). Die alkoholisch/wäßrigen Lösungen enthalten vorzugsweise C₁₋₆-Alkohole (z.B. Methanol, Ethanol, n-Propanol, i-Propanol, n-Butanol und/oder Butoxyethanol) und verdünnte anorganische Säuren (z.B. HCI-Lösungen). Das Massenverhältnis von hydrolysierbarer Metallverbindung und Alkohol liegt hierbei vorzugsweise im Bereich von 0,1 bis 0,25. Der Wassergehalt im Reaktionsgemisch richtet sich nach der Anzahl der hydrolysierbaren Gruppen in der Metallverbindung und beträgt vorzugsweise 0,5 bis 5, insbesondere 1 bis 3 Mol Wasser pro Mol hydrolysierbare Gruppe.

Die nanoskaligen Metalloxid-Teilchen, die erfindungsgemäß als Katalysatoren verwendet werden, werden üblicherweise in einer Menge von 0,5 bis 50 Gew.-%, vorzugsweise 1 bis 40 Gew.-% und besonders bevorzugt 2 bis 35 Gew.-%, bezogen auf das Gesamtgewicht von nanoskaligen Teilchen und zu polymerisierenden bzw. zu vernetzenden Spezies, eingesetzt.

Zur Herstellung von Schichten nach dem erfindungsgemäßen Verfahren kann man z.B. so vorgehen, daß man den zu polymerisierenden bzw. vernetzenden Spezies das nanoskalige Metalloxid z.B. als solches oder in Form einer wie oben beschrieben hergestellten Suspension zugibt. Zwecks Einstellung der rheologischen Eigenschaften kann der resultierenden Zusammensetzung ein Lösungsmittel zugegeben werden bzw. vorhandenes Lösungsmittel daraus entfernt werden.

Insbesondere bei den oben beschriebenen anorganisch-organischen Spezies als zu polymerisierenden bzw. vernetzenden Spezies werden als zuzugebende Lösungsmittel vorzugsweise bei Raumtemperatur flüssige Alkohole, die gegebenenfalls Ethergruppen enthalten können (z.B. Methanol, Ethanol, Propanole, Butanole und Butoxyethanol), eingesetzt.

Die resultierende Beschichtungszusammensetzung kann auf ein geeignetes Substrat, das gegebenenfalls zwecks Verbesserung der Haftung in üblicher Weise vorbehandelt wurde, durch Standard-Beschichtungsverfahren wie beispielsweise Tauchen, Streichen, Bürsten, Rakeln, Walzen, Sprayen und Schleudern aufgetragen werden. Vorzugsweise handelt es sich bei dem Substrat um ein transparentes Substrat, z.B. aus Glas oder einem transparenten Kunststoff (wie beispielsweise Polymethylmethacrylat).

Gegebenenfalls nach vorheriger Antrocknung bei Raumtemperatur (zur teilweisen Entfernung des Lösungsmittels) wird die Härtung (organische Polymerisation bzw. Polyaddition und gegebenenfalls zusätzlich dazu eine weitere Kondensation von von hydrolysierbaren Silicium-Verbindungen abgeleiteten Vorkondensaten) durchgeführt.

Im Falle von Zusammensetzungen zur Herstellung von Formkörpern werden die flüchtigen Bestandteile (z.B. Hydrolysealkohole, Lösungsmittel zur Vordispergierung des teilchenförmigen Materials) zumindest teilweise aus dem Gemisch entfernt (z.B. durch Destillation). Anschließend kann die eingeengte Mischung beispielsweise in Formen gegossen bzw. eingespritzt werden.

Die organische Polymerisation bzw. Polyaddition der polymerisierbaren Gruppen (z.B. Methacrylatgruppen oder Epoxygruppen) kann in Anwesenheit der erfindungsgemäß eingesetzten nanoskaligen Metalloxid-Teilchen sowohl thermisch (vorzugsweise bei Temperaturen im Bereich von 70 bis 200°C, insbesondere 90 bis 130°C) erfolgen und/oder durch Bestrahlung (vorzugsweise mit UV-Licht) initiiert werden. Im Falle der photochemischen Polymerisation ist es insbesondere im Falle von anorganisch-organischen Spezies als zu polymerisierenden bzw. vernetzenden Spezies besonders bevorzugt, nach der photochemischen Polymerisation eine thermische Nachbehandlung bei beispielsweise 90 bis 130°C (d.h. eine thermische Nachkondensation noch vorhandener kondensationsfähiger Gruppen in der anorganisch-organischen Spezies) durchzuführen.

Wie bereits oben erwähnt, eignet sich das erfindungsgemäße Verfahren insbesondere zur Herstellung von transparenten Formkörpern und Schichten für optische Zwecke, ist jedoch nicht auf diese Verwendung beschränkt. Im übrigen sei darauf hingewiesen, daß die erfindungsgemäßen Katalysatoren selbstverständlich auch eine Doppelfunktion ausüben können (insbesondere bei Einsatz im oberen Bereich der angegebenen Mengenbereiche), d.h. nicht nur als Katalysator, sondern auch als (gegebenenfalls verstärkender) Füllstoff für die polymerisierte Matrix aus organischer bzw. anorganisch-organischer Spezies fungieren können.

Die erfindungsgemäß eingesetzten nanoskaligen Metalloxid-Teilchen (insbesondere diejenigen von SnO₂, ZrO₂, TiO₂ und Al₂O₃) eignen sich auch zum Deblockieren von geblockten Isocyanatfunktionen. Diese Tatsache kann man sich z.B. bei der Herstellung von Polyurethanen und Polyharnstoffen aus geblockten Polyisocyanaten und Polyalkoholen bzw. Polyaminen zunutze machen.

Die folgenden Beispiele dienen der weiteren Veranschaulichung der vorliegenden Erfindung.

### Beispiel 1

### A. Herstellung von amorphem TiO₂

Zu einem Gemisch aus 76,018 g 2-Propanol, 4,965 g rauchender HCl-Lösung (37%ig) und 1,038 g bidestilliertem Wasser werden langsam 10,525 g Titantetraisopropanolat (0,037 Mol) getropft. Es entsteht ein klares Reaktionsgemisch, das 24 Stunden bei Raumtemperatur gerührt wird. Anschließend wird das Gemisch destillativ auf die Hälfte seines Volumens eingeengt (Wasserbadtemperatur: 40°C, Druck: 150 bis 50 mbar).

### B. Verwendung des amorphen TiO₂ zur Polymerisation von GPTS-Vorkondensaten

23,63 g Glycidyloxypropyltrimethoxysilan (GPTS, 0,1 Mol) werden mit 2,70 g 0,1 n HCI versetzt und 2 Stunden bei Raumtemperatur gerührt. Anschließend setzt man der Reaktionsmischung tropfenweise die wie oben unter Abschnitt A beschrieben hergestellte TiO₂-Suspension zu. Es entsteht ein klares, leicht gelbes Reaktionsgemisch, das weitere 2 Stunden bei Raumtemperatur gerührt wird.

Anschließend wird das resultierende Kompositmaterial auf Objektträger aus Glas aufgebracht und bei 90 bis 130°C thermisch gehärtet, wodurch transparente Schichten entstehen.

Zur Untersuchung der Epoxid-Vemetzung wurden ¹³C-Festkörper-NMR-Untersuchungen am thermisch gehärteten Material durchgeführt. Die für die Glycidylgruppe (den Epoxy-Ring) typischen Signale bei 44,5 und 51,6 ppm ließen sich bei dieser Untersuchung nicht mehr nachweisen.

### Beispiel 2

### A. Herstellung von amorphem ZrO₂

Zu einem Gemisch aus 76,022 g 2-Propanol, 4,965 g rauchender HCI (37%-ig) und 1,038 g bidestilliertem Wasser werden langsam 14,35 g (0,037 Mol) Zirkontetra-npropanolat gegeben. Anfänglich ist das Reaktionsgemisch stark eingetrübt, klart aber nach 5-minütigem Rühren bei Raumtemperatur unter starker Wärmeentwicklung auf.

### B. Verwendung des amorphen ZrO₂ zur Polymerisation von GPTS-Vorkondensaten

23,63 g GPTS (0,1 Mol) werden mit 2,70 g 0,1 n HCI-Lösung versetzt und 2 Stunden bei Raumtemperatur gerührt. Anschließend setzt man der Reaktionsmischung tropfenweise die wie oben unter Abschnitt A beschrieben hergestellte ZrO₂-Suspension zu. Es entsteht ein leicht transluzentes, schwach gelbes Reaktionsgemisch, das weitere 2 Stunden bei Raumtemperatur gerührt wird.

Anschließend wird das resultierende Kompositmaterial auf Glas-Objektträger aufgebracht und bei 90 bis 130°C thermisch gehärtet, wodurch transparente Schichten entstehen.

Wie im Fall von Beispiel 1 ließen sich durch ¹³C-Festkörper-NMR-Untersuchungen am thermisch gehärteten Material keine Signale bei 44,5 und 51,6 ppm mehr nachweisen.

### Beispiel 3

### A. Dispergieren von kristallinem TiO₂

Zu 40 g 0,1 n HCI-Lösung gibt man langsam 4 g (0,05 Mol) kristallinen Anatas. Das Gemisch wird ca. 10 Minuten bei Raumtemperatur gerührt. Es entsteht eine leicht transluzente, schwach gelbe Suspension.

### B. Verwendung des kristallinen TiO₂ zur Polymerisation von GPTS-Vorkondensaten

23,63 g GPTS (0,1 Mol) werden mit 2,70 g 0,1 n HCI-Lösung versetzt und 2 Stunden bei Raumtemperatur gerührt. Anschließend setzt man der Reaktionsmischung tropfenweise die wie oben unter Abschnitt A beschrieben hergestellte Anatas-Suspension zu. Anfänglich entsteht ein klares Reaktionsgemisch, das nach 10 Minuten eintrübt. Durch Zugabe von 1,5 g rauchender HCl klart das Reaktionsgemisch unter starker Wärmeentwicklung auf.

Anschließend wird das resultierende Kompositmaterial auf Glas-Objektträger aufgebracht und bei 90 bis 130°C thermisch gehärtet, wodurch transparente Schichten entstehen, in denen sich durch ¹³C-Festkörper-NMR-Messungen keine Signale bei 44,5 und 51,6 ppm mehr nachweisen lassen.

### Beispiel 4

### A. Herstellung von amorphem TiO₂

Es wurde wie in Beispiel 1, Abschnitt A, beschrieben vorgegangen, wobei jedoch die destillative Einengung des Gemisches weggelassen wurde.

### B. Verwendung des amorphen TiO₂ zur Polymerisation von MPTS-Vorkondensaten

24,83 g Methacryloxypropyltrimethoxysilan (MPTS, 0,1 Mol) werden mit 2,70 g 0,1 n HCI-Lösung versetzt und 2 Stunden bei Raumtemperatur gerührt. Anschließend setzt man der Reaktionsmischung tropfenweise die TiO₂-Suspension aus Abschnitt A zu. Es entsteht ein klares, leicht gelbes Reaktionsgemisch, das weitere 2 Stunden bei Raumtemperatur gerührt wird.

Anschließend wird das Beschichtungsmaterial auf Glas-Objektträger aufgebracht und in vier Durchläufen mit je 2 m/Min. Bandgeschwindigkeit bei halber Lampenleistung in einer Bandbestrahlungsanlage der Firma Beltron bestrahlt. Im Zuge dieser Behandlung härten die Flüssigkeitsfilme zu transparenten Schichten aus.

Zur Untersuchung der organischen Polymerisation an der Methacrylatgruppe wurden nach der oben beschriebenen photochemischen Härtung IR-Messungen an beschichteten Silicium-Wafem durchgeführt.

Die Signalfläche für die C=C-Bindung (unter Verwendung der unveränderlichen Signalfläche der C=O-Bindung als Referenz) nahm von 11,66 Skalenteilen vor der Bestrahlung auf 4,2 Skalenteile nach der Bestrahlung ab.

### Beispiel 5

Das Verfahren von Beispiel 4 wird wiederholt, mit der Ausnahme, daß statt der photochemischen Polymerisation das auf Objektträger aufgebrachte Beschichtungsmaterial 2 Stunden bei 100°C thermisch behandelt wird. Im Zuge dieser Behandlung härtet das flüssige Kompositmaterial zu transparenten Schichten aus.

Bei der in Beispiel 4 beschriebenen IR-Untersuchung nahm die Signalfläche für die C=C-Bindung von 11,66 Skalenteilen vor der thermischen Härtung auf 7,9 Skalenteile nach der thermischen Härtung ab.

### Beispiel 6

### A. Herstellung von amorphem ZrO₂

Zu einem Gemisch aus 150,0 g 2-Propanol und 4,965 g rauchender HCI (37%-ig) werden langsam 20,0 g (0,026 Mol) Zirkoniumtetraisopropanolat getropft. Es entsteht ein klares Reaktionsgemisch, das ca. 15 bis 20 Minuten bei Raumtemperatur gerührt wird.

### B. Verwendung des amorphen ZrO₂ zur Polymerisation von MPTS-Vorkondensaten

Zu dem unter A beschriebenen Gemisch gibt man 11,03 g (0,022 Mol) MPTS, worauf die Reaktionslösung 10 Minuten bei Raumtemperatur gerührt wird. Dann gibt man zu dem Gemisch eine Wasser/Isopropanol-Mischung (2,25 g bidestilliertes Wasser und 20 g Isopropanol). Es entsteht ein klares Reaktionsgemisch, das unter Rühren 1 Stunde bei 100°C erwärmt wird. Danach wird das Reaktionsgemisch destillativ auf ca. 1/6 seines Volumens eingeengt. Es ensteht ein leicht transluzentes, gelbliches Sol.

Anschließend wird das Beschichtungsmaterial auf Glas-Objektträger aufgebracht und in zwei Durchläufen mit je 2 m/Min. Bandgeschwindigkeit bei halber Lampenleistung in einer Bestrahlungsanlage der Firma Beltron bestrahlt. Im Zuge dieser Behandlung härten die Flüssigkeitsfilme zu transparenten Schichten aus.

Zur Untersuchung der organischen Polymerisation wurde die wie oben in Beispiel 4 beschriebene IR-Messung durchgeführt. Als Ergebnis nahm die Signalfläche für die C=C-Bindung von 15,67 Skalenteilen vor der Bestrahlung auf 6,5 Skalenteile nach der Bestrahlung ab.

### Beispiel 7

Das Verfahren von Beispiel 6 wurde wiederholt, jedoch wurde statt der photochemischen Polymerisation eine thermische Polymerisation bei 100°C (2 Stunden) durchgeführt. Im Zuge dieser Behandlung härtete das flüssige Kompositmaterial zu transparenten Schichten aus. Bei der IR-Untersuchung nahm die Signalfläche für die C=C-Bindung von 15,67 Skalenteilen auf 12,5 Skalenteile nach der thermischen Behandlung ab.

### Herstellungsbeispiel 1

### Dispergierung nanoskaliger Metalloxid-Pulver in unterschiedlichen Medien

(a) 20,473 g Ethanol werden in einer Schottflasche vorgelegt und durch Zugabe von konzentrierter Essigsäure auf pH = 2,8 angesäuert. Anschließend werden der flüssigen Phase unter starkem Rühren langsam 0,519 g γ-AlO(OH) (Disperal® Spezial, Fa. Condea) zugesetzt. Der pH-Wert wird unter Verwendung einer pH-Elektrode für nicht-wäßrige Lösungsmittel während der Zugabe des Pulvers ständig überwacht und gegebenenfalls durch Zutropfen von konzentrierter Essigsäure wieder auf 2,8 eingestellt. Anschließend wird die Suspension ca. 20 Minuten lang bei Raumtemperatur Ultraschall-behandelt.
(b) 6,95 g bidestilliertes H₂O, 20,15 g 0,1N wäßrige HCI-Lösung und 1,18 g Butoxyethanol werden gemischt. Zu diesem Gemisch gibt man langsam und unter starkem Rühren 0,721 γ-AlO(OH)_{AcOH} (Disperal® Sol P3, Fa. Condea). Die Suspension wird anschließend ca. 20 Minuten lang bei Raumtemperatur Ultraschall-behandelt.
(c) 16,01 g 0,1N wäßrige HCl-Lösung werden vorgelegt. Dazu gibt man langsam und unter starkem Rühren 1,59 g γ-AlO(OH)_{AcOH} (Disperal® Sol P3, Fa. Condea). Anschließend wird die Suspension ca. 20 Minuten lang bei Raumtemperatur Ultraschall-be handelt.
(d) 4,77 g 0,1N wäßrige HCI-Lösung und 1,05 g Acetylaceton werden vorgelegt. Dazu gibt man langsam und unter starkem Rühren 0,63 g γ-AlO(OH)_{AcOH} (Disperal® Sol P3, Fa. Condea). Anschließend wird die Suspension ca. 20 Minuten lang bei Raumtemperatur Ultraschall-behandelt.
(e) 19,98 g bidestilliertes H₂O werden vorgelegt. Der pH-Wert der wäßrigen Phase wid durch Zusatz von konzentrierter Salpetersäure auf 3,5 eingestellt. Dazu gibt man unter starkem Rühren langsam 2,15 g γ-Al₂O₃ (Fa. Degussa). Der pH-Wert wird unter Verwendung einer pH-Elektrode während der Zugabe des Pulvers ständig überwacht und gegebenenfalls durch Zutropfen von konzentrierter Salpetersäure wieder auf 3,5 eingestellt. Anschließend wird die Suspension ca. 20 Minuten lang bei Raumtemperatur Ultraschall-behandelt.
(f) Zu 11,82 g GPTS gibt man unter starkem Rühren in kleinen Portionen 0,21 g γ-Al₂O₃ (Aluminiumoxid C, Fa. Degussa) oder γ-AlO(OH) (Disperal® Spezial, Fa. Condea) bzw. γ-AlO(OH)_{AcOH} (Disperal® Sol P3, Fa. Condea). Anschließend wird die Suspension ca. 20 Minuten lang bei Raumtemperatur Ultraschall-behandelt.
(g) Zu 10,42 g Tetraethoxysilan (TEOS) gibt man unter starkem Rühren in kleinen Portionen 0,19 g γ-Al₂O₃ (Aluminiumoxid C, Fa. Degussa) oder 0,18 g γ-AlO(OH) (Disperal® Spezial, Fa. Condea) bzw. 0,24 g γ-AlO(OH)_{AcOH} (Disperal® Sol P3, Fa. Condea). Anschließend wird die Suspension ca. 20 Minuten lang bei Raumtemperatur Ultraschall-behandelt.
(h) Zu 11,23 g γ-Aminopropyltriethoxysilan (AMEO) gibt man unter starkem Rühren in kleinen Portionen 0,19 g γ-Al₂O₃ (Aluminiumoxid C, Fa. Degussa) oder 0,22 g γ-AlO(OH) (Disperal® Spezial, Fa. Condea) bzw. γ-AlO(OH)_{AcOH} (Disperal® Sol P3, Fa. Condea). Anschließend wird die Suspension ca. 20 Minuten lang bei Raumtemperatur Ultraschall-behandelt.
(i) Zu 10,05 g N-(2-Aminoethyl)-3-aminopropyltrimethoxysilan (DIAMO) gibt man unter starkem Rühren in kleinen Portionen 0,17 g γ-Al₂O₃ (Aluminiumoxid C, Fa. Degussa) oder 0,18 g γ-AlO(OH) (Disperal® Spezial, Fa. Condea) bzw. 0,24 g γ-AlO(OH)_{AcOH} (Disperal® Sol P3, Fa. Condea). Anschließend wird die Suspension ca. 20 Minuten lang bei Raumtemperatur Ultraschall-behandelt.
(j) Zu 17,43 g GPTS gibt man unter starkem Rühren in kleinen Portionen 0,39 g γ-Al₂O₃ (Aluminiumoxid C, Fa. Degussa) oder γ-AlO(OH) (Disperal® Spezial, Fa. Condea) bzw. γ-AlO(OH)_{AcOH} (Disperal® Sol P3, Fa. Condea). Anschließend wird die Suspension ca. 20 Minuten lang bei Raumtemperatur Ultraschall-behandelt.
(k) Zu 12,67 g.TEOS gibt man unter starkem Rühren in kleinen-Portionen 0,30 g γ-Al₂O₃ (Aluminiumoxid C, Fa. Degussa) oder γ-AlO(OH) (Disperal® Spezial, Fa. Condea) bzw. γ-AlO(OH)_{AcOH} (Disperal® Sol P3, Fa. Condea). Anschließend werden diesem Gemisch unter Rühren 2,19 g 0,1N HCl-Lösung zugesetzt.
(I) Zu 19,23 g AMEO gibt man unter starkem Rühren in kleinen Portionen 0,44 g γ-Al₂O₃ (Aluminiumoxid C, Fa. Degussa) oder γ-AlO(OH) (Disperal® Spezial, Fa. Condea) bzw. γ-AlO(OH)_{AcOH} (Disperal® Sol P3, Fa. Condea). Anschließend werden diesem Gemisch unter Rühren 2,85 g 0,1N HCI-Lösung zugesetzt.

### Herstellungsbeispiele 2 bis 15

### Herstellung von Beschichtungssolen

GPTS und TEOS bzw. Phenyltrimethoxysilan (PTMS) werden in einem 500 ml-Rundkolben gemischt und anschließend mit der Menge an AIO(OH)-Suspension (siehe Herstellungsbeispiel 1 (c)) versetzt, die (berechnet als Wasser) zur halbstöchiometrischen Hydrolyse der Alkoxysilane notwendig ist. Das Gemisch wird ca. 2 Stunden bei Raumtemperatur gerührt und anschließend mit der restlichen Menge an Böhmit-Suspension versetzt und weitere 2 Stunden bei Raumtemperatur gerührt. Anschließend werden der Mischung Lösungsmittel und Fließadditiv zugesetzt. Das Reaktionsgemisch wird dann mindestens 3 Stunden bei Raumtemperatur gerührt. Die Einwaagen der verwendeten Edukte sind in Tabelle 1 zusammengestellt.

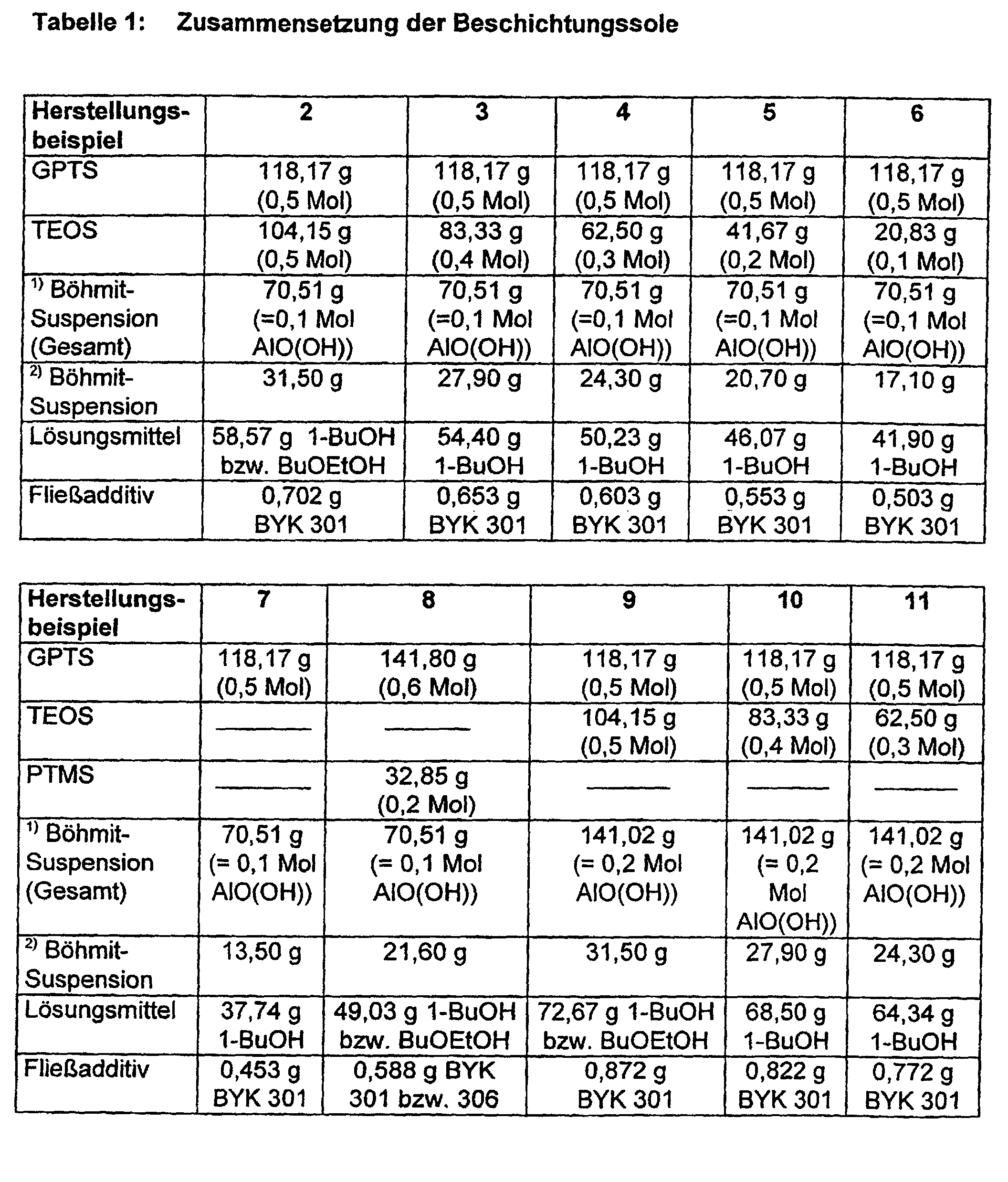

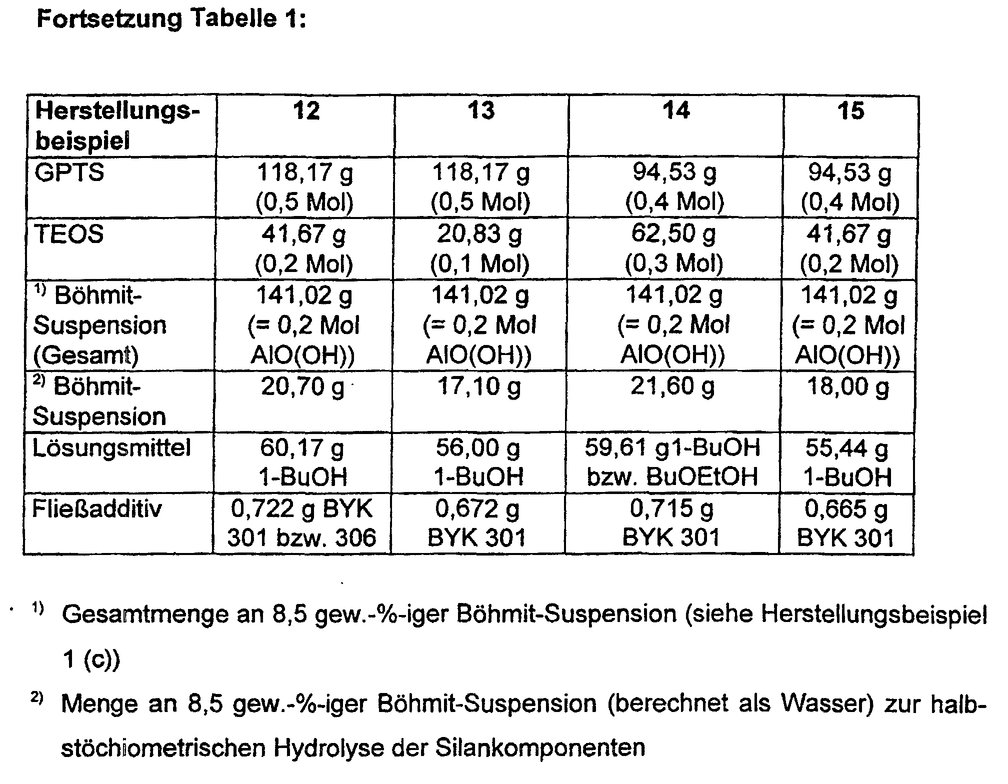

### Herstellungsbeispiele 16 bis 35

### Herstellung von Beschichtungssolen

GPTS und TEOS (bzw. PTMS) werden in einem 500 ml-Rundkolben gemischt und anschließend mit der Menge an AlO(OH)-Suspension (siehe Herstellungsbeispiel 1 (c)) versetzt, die (berechnet als Wasser) zur halbstöchiometrischen Hydrolyse der Alkoxysilane notwendig ist. Die Mischung wird dann ca. 2 Stunden bei Raumtemperatur gerührt und dann im Eisbad auf ca. 0°C gekühlt. Unter Kühlung wird Aluminiumtributoxyethanolat tropfenweise zugegeben. Das Gemisch wird anschließend ca. 2 Stunden bei Raumtemperatur gerührt. Unter Eiskühlung wird die Reaktionsmischung dann tropfenweise mit der restlichen Menge an Böhmit-Suspension versetzt. Nach 2-stündigem Rühren bei Raumtemperatur werden der Mischung Lösungsmittel und Fließadditiv zugesetzt. Die Einwaagen der verwendeten Edukte sind in Tabelle 2 zusammengestellt.

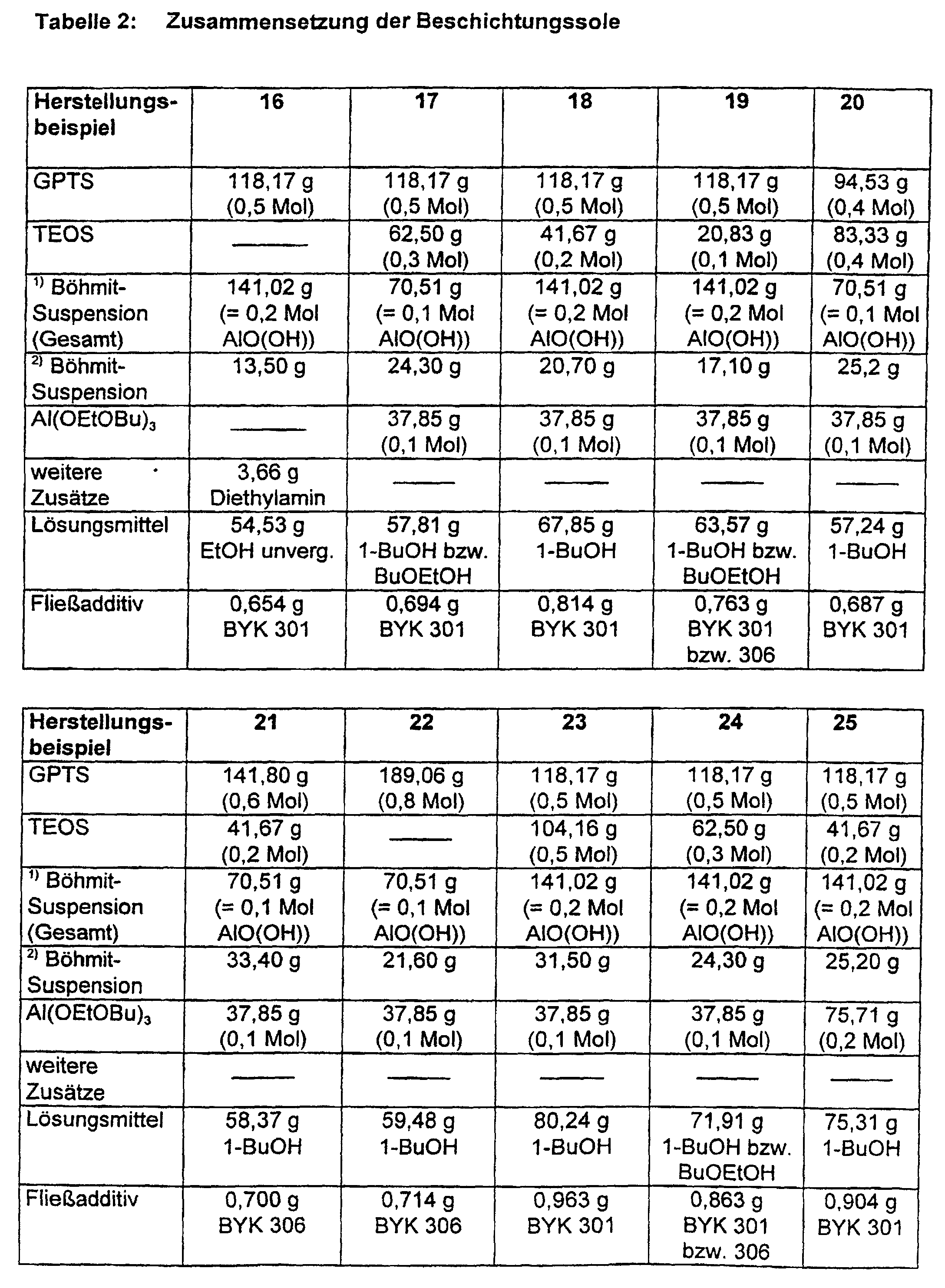

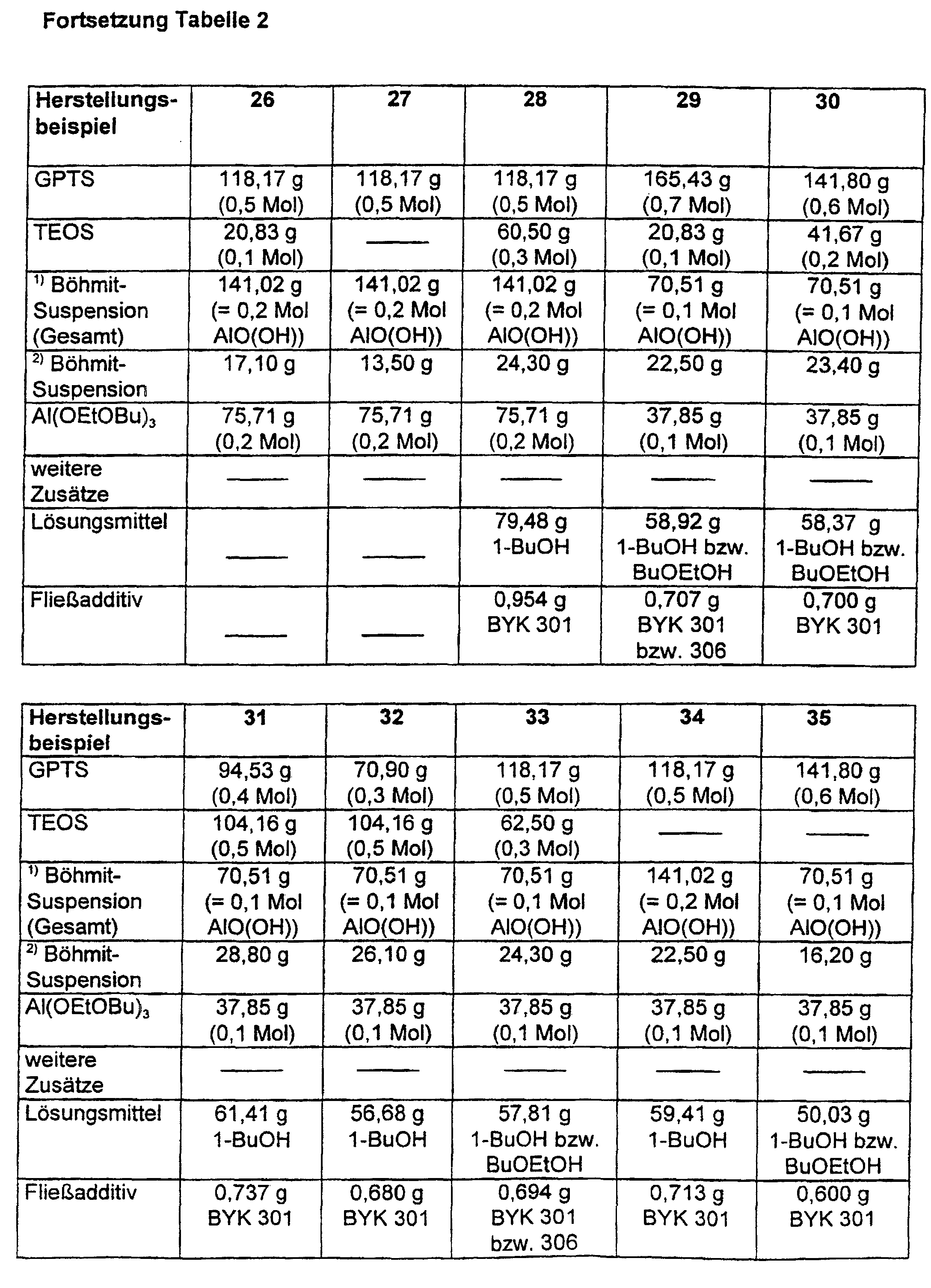

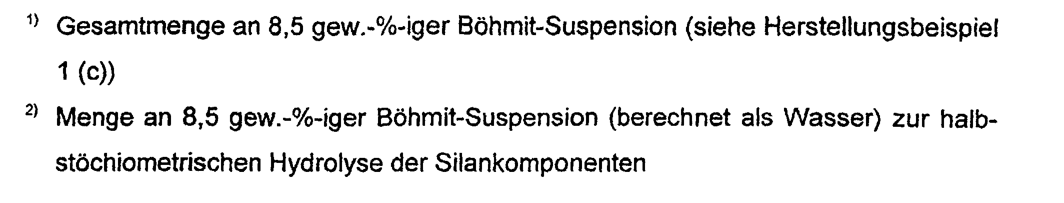

### Herstellungsbeispiel 36

118,17 g GPTS und 62,50 g TEOS werden in einem 500 ml-Rundkolben gemischt. Zur halbstöchiometrischen Hydrolyse der Alkoxysilane werden der Mischung 24,30 g AIO(OH)-Suspension (siehe Herstellungsbeispiel 1 (c)), berechnet als Wasser, zugesetzt. Das Reaktionsgemisch wird ca. 2 Stunden bei Raumtemperatur gerührt und anschließend mit 45,66 g Bisphenol A versetzt. Die Mischung wird bei Raumtemperatur gerührt, bis sich das Bisphenol A vollständig aufgelöst hat. Unter Kühlung im Eisbad werden dann 37,85 g Aluminiumtributoxyethanolat tropfenweise zugegeben. Das Gemisch wird anschließend ca. 2 Stunden bei Raumtemperatur gerührt. Unter Eiskühlung wird das Gemisch dann tropfenweise mit 46,21 g Böhmit-Suspension versetzt. Nach 2-stündigem Rühren bei Raumtemperatur werden der Mischung Lösungsmittel und Fließadditiv zugesetzt.

### Herstellungsbeispiel 37:

118,17 g GPTS und 62,50 g TEOS werden in einem 500 ml-Rundkolben gemischt. Zur halbstöchiometrischen Hydrolyse der Alkoxysilane werden der Mischung 24,30 g AlO(OH)-Suspension (siehe Herstellungsbeispiel 1 (c)), berechnet als Wasser, zugesetzt. Das Reaktionsgemisch wird ca. 2 Stunden bei Raumtemperatur gerührt und anschließend mit 4,10 g 1-Methylimidazol versetzt. Die Reaktionslösung wird weitere 2 Stunden bei Raumtemperatur gerührt und anschließend mit 116,72 g Böhmit-Suspension versetzt. Nach 2-stündigem Rühren bei Raumtemperatur werden der Mischung Lösungsmittel und Fließadditiv zugesetzt.

### Herstellungsbeispiel 38:

165,43 g GPTS und 20,83 g TEOS werden in einem 500 ml-Rundkolben gemischt. Zur halbstöchiometrischen Hydrolyse der Alkoxysilane werden der Mischung 17,10 g AIO(OH)-Suspension (siehe Herstellungsbeispiel 1 (c)), berechnet als Wasser, zugesetzt. Das Reaktionsgemisch wird ca. 2 Stunden bei Raumtemperatur gerührt und anschließend mit 63,92 g Bisphenol A versetzt. Die Mischung wird bei Raumtemperatur gerührt, bis sich das Bisphenol A vollständig aufgelöst hat; anschließend werden dem Reaktionsgemisch 2,87 g 1-Methylimidazol zugesetzt. Das Gemisch wird ca. 2 Stunden bei Raumtemperatur gerührt und dann mit 53,41 g Böhmit-Suspension versetzt. Nach 2-stündigem Rühren bei Raumtemperatur werden der Mischung Lösungsmittel und Fließadditiv zugesetzt.

### Herstellungsbeispiel 39:

118,17 g GPTS und 62,50 g TEOS werden in einem 500 ml-Rundkolben gemischt. Zur halbstöchiometrischen Hydrolyse der Alkoxysilane werden der Mischung 24,30 g AlO(OH)-Suspension (siehe Herstellungsbeispiel 1 (c)), berechnet als Wasser, zugesetzt. Das Reaktionsgemisch wird ca. 2 Stunden bei Raumtemperatur gerührt und anschließend mit 50,56 g 1,4-Butandioldiglycidylether versetzt. Unter Kühlung im Eisbad werden der Mischung dann 37,85 g Aluminiumtributoxyethanolat tropfenweise zugegeben. Das Gemisch wird anschließend ca. 2 Stunden bei Raumtemperatur gerührt und dann unter Eiskühlung tropfenweise mit 46,21 g Böhmit-Suspension versetzt. Nach 2-stündigem Rühren bei Raumtemperatur werden der Mischung Lösungsmittel und Fließadditiv zugesetzt.

## Patentansprüche

1. Verfahren zur thermischen und/oder photochemischen Polymerisation bzw. Vernetzung von Spezies mit mindestens einer polymerisierbaren Kohlenstoff-Kohlenstoff-Mehrfachbindung, **dadurch gekennzeichnet, daß** als thermischer und/oder photochemischer Polymerisationskatalysator nanoskalige Teilchen von mindestens einem Metalloxid mit einer durchschnittlichen Teilchengröße von nicht mehr als 200 nm eingesetzt werden.

2. Verfahren zur thermischen und/oder photochemischen Polymerisation bzw. Vernetzung von Spezies mit mindestens einem einer Ringöffnungspolymerisation zugänglichen kohlenstoffhaltigen Ring, der vorzugsweise mindestens ein Heteroatom aus der Gruppe Sauerstoff, Stickstoff und Schwefel als Ringatom enthält, **dadurch gekennzeichnet, daß** als thermischer und/oder photochemischer Polymerisationskatalysator nanoskalige Teilchen von mindestens einem Metalloxid mit einer durchschnittlichen Teilchengröße von nicht mehr als 200 nm eingesetzt werden.

3. Verfahren nach irgendeinem der Ansprüche 1 und 2, **dadurch gekennzeichnet, daß** es sich bei den zu polymerisierenden bzw. vernetzenden Spezies um Monomere, Oligomere bzw. Polymere handelt, die ausschließlich aus Kohlenstoff und Wasserstoff sowie gegebenenfalls einem oder mehreren von Sauerstoff, Stickstoff, Schwefel und Halogen aufgebaut sind.

4. Verfahren nach irgendeinem der Ansprüche 1 und 2, **dadurch gekennzeichnet, daß** es sich bei den zu polymerisierenden bzw. vemetzenden Spezies um Monomere, Oligomere bzw. Polymere handelt, die neben Kohlenstoff, Wasserstoff sowie gegebenenfalls einem oder mehreren von Sauerstoff, Stickstoff, Schwefel und Halogen von Si sowie gegebenenfalls mindestens einem Element aus der Gruppe Al, Ti und Zr aufgebaut werden.

5. Verfahren nach Anspruch 4, **dadurch gekennzeichnet, daß** die zu polymerisierende bzw. vemetzende Spezies über mindestens ein Si-Atom verfügt, an das über eine Si-C-Bindung eine polymerisierbare Kohlenstoff-Kohlenstoff-Mehrfachbindung und/oder ein einer Ringöffnungspolymerisation zugänglicher kohlenstoffhaltiger Ring geknüpft ist.

6. Verfahren nach irgendeinem der Ansprüche 1 und 3 bis 5, **dadurch gekennzeichnet, daß** es sich bei der polymerisierbaren Kohlenstoff-Kohlenstoff-Mehrfachbindung um eine Kohlenstoff-Kohlenstoff-Doppelbindung handelt.

7. Verfahren nach Anspruch 6, **dadurch gekennzeichnet, daß** es sich bei der Kohlenstoff-Kohlenstoff-Doppelbindung um eine Doppelbindung einer (Meth)-acryl-Gruppierung handelt.

8. Verfahren nach irgendeinem der Ansprüche 2 bis 5, **dadurch gekennzeichnet, daß** es sich bei dem einer Ringöffnungspolymerisation zugänglichen Ring um einen Ring mit 3 oder 4 Ringgliedem, vorzugsweise einen Oxiran-, Oxetan- oder Aziridin-Ring, handelt.

9. Verfahren nach irgendeinem der Ansprüche 2 bis 5, **dadurch gekennzeichnet, daß** es sich bei dem einer Ringöffnungspolymerisation zugänglichen Ring um einen Lactam-Ring mit vorzugsweise 5 bis 7 Ringgliedern handelt.

10. Verfahren nach irgendeinem der Ansprüche 1 bis 9, **dadurch gekennzeichnet, daß** das Metalloxid von mindestens einem Metall aus den Hauptgruppen IIIa und IVa und den Nebengruppen Ib, IIb, IVb, Vb und Vlb abgeleitet ist.

11. Verfahren nach Anspruch 10, **dadurch gekennzeichnet, daß** das Metall aus mindestens einem von Al, Sn, Cu, Ag, Zn, Ti, Zr, V, Nb, Cr, Mo und W, insbesondere Al, Sn, Ti und Zr, ausgewählt ist.

12. Verfahren nach irgendeinem der Ansprüche 1 bis 11, **dadurch gekennzeichnet, daß** die nanoskaligen Teilchen den zu polymerisierenden bzw. vemetzenden Spezies zugegeben werden.

13. Verfahren nach irgendeinem der Ansprüche 1 bis 11, **dadurch gekennzeichnet, daß** die nanoskaligen Teilchen in situ erzeugt werden, vorzugsweise durch Hydrolyse und Kondensation entsprechender Ausgangsverbindungen.

14. Verfahren nach irgendeinem der Ansprüche 1 bis 13, **dadurch gekennzeichnet, daß** die nanoskaligen Teilchen eine durchschnittliche Teilchengröße im Bereich von 1 bis 100 nm, vorzugsweise 2 bis 50 nm, aufweisen.

15. Verfahren nach irgendeinem der Ansprüche 1 bis 14, **dadurch gekennzeichnet, daß** die nanoskaligen Teilchen in einer Menge von 0,5 bis 50 Gew.-%, vorzugsweise 2 bis 35 Gew.-%, bezogen auf das Gesamtgewicht der nanoskaligen Teilchen und der zu polymerisierenden bzw. vernetzenden Spezies, eingesetzt werden.

16. Verfahren nach irgendeinem der Ansprüche 1 bis 15, **dadurch gekennzeichnet, daß** die nanoskaligen Teilchen als alleinige Polymerisationskatalysatoren verwendet werden.

17. Verfahren nach irgendeinem der Ansprüche 1 bis 16, in welchem Formkörper oder Schichten, die vorzugsweise transparent sind, hergestellt werden.

18. Formkörper oder Schichten, insbesondere für optische Zwecke, erhältlich nach dem Verfahren gemäß Anspruch 16.

19. Verwendung von nanoskaligen Metalloxid-Teilchen mit einer durchschnittlichen Teilchengröße von nicht mehr als 200 nm als Katalysatoren für die thermische oder photochemische Polymerisation von Spezies, die über mindestens eine polymerisierbare Kohlenstoff-Kohlenstoff-Mehrfachbindung und/oder mindestens einen einer Ringöffnungspolymerisation zugänglichen kohlenstoffhaltigen Ring verfügen, oder als Debtockierungsmittel für geblockte (Poly)isocyanate.

## Claims

1. Process for the thermal and/or photochemical polymerization or crosslinking, respectively of species having at least one polymerizable carbon-carbon multiple bond, **characterized in that** nanoscale particles of at least one metal oxide having an average particle size of not more than 200 nm are used as thermal and/or photochemical polymerization catalyst.

2. Process for the thermal and/or photochemical polymerization or crosslinking, respectively of species having at least one carbon containing ring capable of undergoing a ring opening polymerization and preferably containing at least one heteroatom selected from the group consisting of oxygen, nitrogen and sulfur as ring atom, **characterized in that** nanoscale particles of at least one metal oxide having an average particle size of not more than 200 nm are used as thermal and/or photochemical polymerization catalysts.

3. Process according to anyone of claims 1 and 2, **characterized in that** the species to be polymerized or crosslinked, respectively are monomers, oligomers or polymers which are exclusively constituted by carbon and hydrogen as well as optionally one or more of oxygen, nitrogen, sulfur and halogen.

4. Process according to any one of claims 1 and 2, **characterized in that** the species to be polymerized or crosslinked, respectively are monomers, oligomers or polymers which are constituted by, in addition to carbon, hydrogen and, optionally one or more of oxygen, nitrogen, sulfur and halogen, Si as well as optionally at least one element selected from the group consisting of Al, Ti and Zr.

5. Process according to claim 4, **characterized in that** the species to be polymerized or crosslinked, respectively has at least one Si atom to which a polymerizable carbon-carbon multiple bond and/or a carbon containing ring capable of undergoing a ring opening polymerization is linked via a Si-C bond.

6. Process according to any one of claims 1 and 3 to 5, **characterized in that** the polymerizable carbon-carbon multiple bond is a carbon-carbon double bond.

7. Process according to claim 6, **characterized in that** said carbon-carbon double bond is a double bond of a (meth)acryl group.

8. Process according to any one of claims 2 to 5, **characterized in that** said ring capable of undergoing a ring opening polymerization is a ring having 3 or 4 ring members, preferably an oxirane, oxetane or aziridine ring.

9. Process according to any one of claims 2 to 5, **characterized in that** said ring capable of undergoing a ring opening polymerization is a lactam ring having preferably 5 to 7 ring members.

10. Process according to any one of claims 1 to 9, **characterized in that** said metal oxide is derived from at least one metal of the main groups IIIa and IVa and the subgroups Ib, IIb, IVb, Vb and VIb.

11. Process according to claim 10, **characterized in that** said metal is selected from at least one of Al, Sn, Cu, Ag, Zn, Ti, Zr, V, Nb, Cr, Mo and W, particularly from Al, Sn, Ti and Zr.

12. Process according to any one of claims 1 to 11, **characterized in that** said nanoscale particles are added to the species to be polymerized or crosslinked, respectively.

13. Process according to any one of claims 1 to 11, **characterized in that** said nanoscale particles are generated in situ, preferably by hydrolysis and condensation of corresponding starting compounds.

14. Process according to any one of claims 1 to 13, **characterized in that** said nanoscale particles have an average particle size ranging from 1 to 100 nm, preferably from 2 to 50 nm.

15. Process according to any one of claims 1 to 14, **characterized in that** said nanoscale particles are employed in an amount of 0.5 to 50% by wt., preferably 2 to 35% by wt., based on the total weight of the nanoscale particles and the species to be polymerized or crosslinked, respectively.

16. Process according to any one of claims 1 to 15, **characterized in that** said nanoscale particles are used as the sole polymerization catalysts.

17. Process according to any one of claims 1 to 16, wherein molded articles or coatings which are preferably transparent are produced.

18. Molded articles or coatings, particularly for optical purposes, obtainable according to the process according to claim 16.

19. Use of nanoscale metal oxide particles having an average particle size of not more than 200 nm as catalysts for the thermal or photochemical polymerization of species having at least one polymerizable carbon-carbon multiple bond and/or at least one carbon containing ring capable of undergoing a ring opening polymerization, or as deblocking agent for blocked (poly)isocyanates.

## Revendications

1. Procédé de polymérisation ou de réticulation thermique et/ou photochimique de composés comportant au moins une liaison carbone-carbone multiple polymérisable, **caractérisé par le fait que** l'on utilise en tant que catalyseur de polymérisation thermique et/ou photochimique, des nanoparticules d'au moins un oxyde métallique ayant une taille moyenne de particules n'excédant pas 200 nm.

2. Procédé de polymérisation ou de réticulation thermique et/ou photochimique de composés comportant au moins un cycle carboné susceptible de participer à une réaction de polymérisation par ouverture de cycle, et qui contient de préférence au moins un hétéroatome choisi parmi les atomes d'oxygène, d'azote et de soufre, **caractérisé par le fait que** l'on utilise en tant que catalyseur de polymérisation thermique et/ou photochimique, des nanoparticules d'au moins un oxyde métallique ayant une taille moyenne de particules n'excédant pas 200 nm.

3. Procédé selon l'une des revendications 1 et 2, **caractérisé par le fait que** le composé à polymériser ou à réticuler est un monomère, un oligomère ou un polymère constitué uniquement d'atomes de carbone, d'hydrogène et d'hétéroatomes choisis parmi les atomes d'oxygène, d'azote, de soufre et d'halogène.

4. Procédé selon l'une des revendications 1 et 2, **caractérisé par le fait que** le composé à polymériser ou à réticuler est un monomère, un oligomère ou un polymère contenant, en plus d'atomes de carbone, d'hydrogène et d'hétéroatomes choisis parmi les atomes d'oxygène, d'azote, de soufre et d'halogène, des atomes de Si ainsi que des atomes d'au mois un élément du groupe formé par Al, Ti et Zr.

5. Procédé selon la revendication 4, **caractérisé par le fait que** le composé à polymériser ou à réticuler comprend au moins un atome de silicium auquel est fixé, par une liaison Si-C, une liaison carbone-carbone multiple polymérisable et/ou un cycle carboné susceptible de participer à une réaction de polymérisation par ouverture de cycles.

6. Procédé selon l'une quelconque des revendications 1 et 3 à 5, **caractérisé par le fait que** la liaison carbone-carbone multiple polymérisable est une double liaison C=C.

7. Procédé selon la revendication 6, **caractérisé par le fait que** la double liaison C=C est une double liaison d'un groupe (méth)acryle.

8. Procédé selon l'une quelconque des revendications 2 à 5, **caractérisé par le fait que** le cycle susceptible de participer à une réaction de polymérisation par ouverture de cycles est un cycle à 3 ou 4 chaînons, de préférence un cycle oxirane, oxétane ou aziridine.

9. Procédé selon l'une quelconque des revendications 2 à 5, **caractérisé par le fait que** le cycle susceptible de participer à une réaction de polymérisation par ouverture de cycles est un cycle lactame comportant de préférence de 5 à 7 chaînons.

10. Procédé selon l'une quelconque des revendications 1 à 9, **caractérisé par le fait que** l'oxyde métallique est un oxyde d'au moins un métal des groupes principaux IIIa et IVa ou des groupes secondaires Ib, IIb, IVb, Vb et VIb.

11. Procédé selon la revendication 10, **caractérisé par le fait que** le métal est choisi parmi Al, Sn, Cu, Ag, Zn, Ti, Zr, V, Nb, Cr, Mo et W, en particulier parmi Al, Sn, Ti et Zr.

12. Procédé selon l'une quelconque des revendications 1 à 11, **caractérisé par le fait que** l'on ajoute les nanoparticules aux composés à polymériser ou à réticuler.

13. Procédé selon l'une quelconque des revendications 1 à 11, **caractérisé par le fait que** les nanoparticules sont formées *in situ*, *de* préférence par hydrolyse et condensation de composés de départ appropriés.

14. Procédé selon l'une quelconque des revendications 1 à 13, **caractérisé par le fait que** les nanoparticules ont une taille moyenne comprise entre 1 et 100 nm, de préférence entre 2 et 50 nm.

15. Procédé selon l'une quelconque des revendications 1 à 14, **caractérisé par le fait que** les nanoparticules sont utilisées en une quantité comprise entre 0,5 et 50 % en poids, de préférence entre 2 et 35 % en poids, rapporté au poids total de nanoparticules et des composés à polymériser ou à réticuler.

16. Procédé selon l'une quelconque des revendications 1 à 15, **caractérisé par le fait que** les nanoparticules sont les seuls catalyseurs de polymérisation utilisés.

17. Procédé selon l'une quelconque des revendications 1 à 16, pour la fabrication d'articles moulés ou de revêtements qui sont de préférence transparents.

18. Articles moulés ou revêtements, en particulier pour une utilisation en optique, susceptibles d'être obtenus par le procédé selon la revendication 16.

19. Utilisation de nanoparticules en oxyde métallique ayant une taille moyenne n'excédant pas 200 nm, en tant que catalyseurs pour la polymérisation thermique et/ou photochimique de composés comportant au moins une liaison carbone-carbone multiple polymérisable et/ou au moins un cycle carboné susceptible de participer à une réaction de polymérisation par ouverture de cycle, ou pour le déblocage de (poly)isocyanates bloqués.
